# EUROPEAN PATENT SPECIFICATION

(11) **EP 4 255 256 B1**
(45) Date of publication and mention of the grant of the patent: **19.08.2026**
(21) Application number: 21827217.7
(22) Date of filing: 29.11.2021
(51) Int. Cl.: A47B 96/20, A47B 47/02, A47B 87/00, F16B 12/34, F16B 12/36

(54) **DOOR FOR PIECE OF FURNITURE AND PIECE OF FURNITURE**
TÜR FÜR EIN MÖBEL UND MÖBEL
PORTE POUR MEUBLE ET MEUBLE

(30) Priority: 04.12.2020 IT 202000029987
(43) Date of publication of application: 11.10.2023
(73) Proprietor: VD Invest SA, 1700 Fribourg (CH)
(72) Inventor: VEZZONI, Massimo, 26010 Sergnano, Cremona (IT)
(74) Representative: De Lorenzo, Danilo
(86) International application number: PCT/IB2021/061072
(87) International publication number: WO 2022/118174

(56) References cited:
- EP-A1- 1 769 701
- DE-U1- 202009 004 205
- US-A1- 2013 337 220
- US-A1- 2014 223 855
- US-A1- 2017 238 701

## Description

The present invention relates to a door for a piece of furniture and a corresponding piece of furniture.

Modular units are known in the art for the composition of box-shaped modules joined together to form pieces of furniture such as kitchens, bookcases, or display furniture for the home or office. An example of such pieces of furniture is disclosed in US2017/238701A1.

Typically, such solutions involve wooden modules that the end user or a specialized installer may join together to form the final piece of furniture, such as in US2013/337220A1. Subsequently, the corresponding doors are installed on the wooden modules for access to each compartment of the wooden module. A door with a transparent panel and a frame composed of a single metal bar is disclosed in DE202009004205U1.

However, there are some problems with the known solutions.

First, the composition of a whole piece of furniture requires the transport of bulky and heavy modular elements or panels to the place of installation and the consequent need to predict and plan in advance the weight and volumes occupied for the transport.

Furthermore, once the type of furniture has been defined, it is not possible to rearrange the modular components to change their final appearance.

Moreover, in the systems of the prior art, it is generally not possible to vary the outer finishes of the furniture at will, nor is it possible to vary the finishes of each face of the box-shaped module that defines the basic modular element after the final installation of the furniture.

In other words, it is not possible to change over time, in a simple and immediate way, the shape and/or color of the walls that make up a compartment of the furniture.

Inconveniently, moreover, just as it is not possible to change the outer finish of the furniture over time, it is also not possible to change the finish of each door over time, without having to replace the entire door.

In addition, the modular compositions of the prior art are found to have modules with considerable thickness that are not suitable for making furniture with a light and linear aesthetic character, as well as being particularly heavy to move.

This is especially true for doors, which are often heavy to move, so that their strength is ensured over time or, when they are light, they are subject to deformations or flexing due to the inherent structure of the door, especially in the case of certain sizes.

Therefore, the need is strongly felt to propose a door for a piece of furniture and a piece of furniture that are able to overcome the drawbacks of the prior art.

This need is satisfied with a door for a piece of furniture and a piece of furniture according to the attached independent claims. The dependent claims describe preferred or advantageous embodiments.

The features and advantages of the door and of the piece of furniture will become apparent from the description below of its preferred embodiments, given by way of non-limiting example, with reference to the attached figures, wherein:
Fig. 1 shows an axonometric view of an exploded drawing of a box-shaped module for a piece of furniture not according to the invention;
Fig. 1a shows an enlargement of a detail of Fig. 1;
Fig. 1b shows an axonometric view of an exploded drawing of a box-shaped module for a piece of furniture not according to the invention, which differs substantially from the example of Fig. 1 in the absence of a finishing element on the bottom panel;
Fig. 1c shows an axonometric view of an exploded drawing of a box-shaped module for a piece of furniture not according to the invention, which differs with respect to the example of Fig. 1 in that it includes a top covering finishing element and a bottom finishing element;
Fig. 2 shows an axonometric view of a metal sheet for making a modular unit in an unfolded configuration;
Fig. 2a shows an axonometric view of a modular unit obtained as a result of folding the metal sheet in Fig. 2;
Fig. 3 shows an axonometric view of an exploded drawing of a box-shaped module for a piece of furniture not according to the invention;
Fig. 3a shows an axonometric view of the modular unit comprised in the box-shaped module for a piece of furniture of Fig. 3;
Fig. 4 shows an axonometric view of an exploded drawing of a piece of furniture according to an embodiment of this invention, made by joining two modular units and coupling at least two finishing elements;
Fig. 5 is an enlarged detail of Fig. 4;
Fig. 5a shows an axonometric view of a module fixing not according to the invention;
Fig. 5b shows an axonometric view of a module fixing element not according to the invention;
Fig. 5c shows an axonometric view of a module fixing element not according to the invention;
Fig. 6 shows a detail of a finishing element and a fixing element used in an embodiment of this invention;
Fig. 7 and 7a each show a configuration of a fixing element inserted into an elastic element used in an embodiment of this invention;
Fig. 8 shows a plan view from above of a section of a portion of a right panel of a modular unit and of an elastic element inserted into the right panel, in accordance with an embodiment used in this invention;
Fig. 9 shows an axonometric view of an exploded drawing of a finishing element not according to the this invention and a door not according to the invention when the finishing element is coupled to a finishing support frame made of metal sheet;
Fig. 10 shows an axonometric view of an exploded drawing of a finishing element not according to the invention and a door not according to the invention when the finishing element is coupled to a finishing support frame 45 made of aluminum;
Fig. 10a shows an axonometric view of a door according to an embodiment of this invention when the finishing element is coupled to a finishing support frame, preferably made of aluminum;
Fig. 11 shows an axonometric view of an exploded drawing of a finishing element not according to the invention and a door not according to the invention when the finishing element is coupled with a finishing support frame made of metal sheet;
Fig. 12 shows an axonometric view of an exploded drawing of a finishing element not according to the invention and a door not according to the invention when the finishing element is coupled with a finishing support frame made of aluminum.

With reference to the aforesaid figures, according to one aspect of this invention, the reference number 1 is used to collectively refer to a modular unit 1 for the composition of a box-shaped module 100, 101 for a piece of furniture, for example for a modular kitchen or a bookcase or a cabinet or for bathroom furniture and the like.

Said modular unit 1 comprises a bottom panel 10, a right panel 20, and a left panel 30, made of thin metal sheet and coupled together to define an inner cavity I with an open box shape.

Each panel of said right 20 and left panels 30 comprises an inner panel face 20', 30', facing the inner cavity I and an outer panel face 20", not facing the inner cavity I. Moreover, each right panel 20 or left panel 30 extends primarily according to a first extension direction X and a second extension direction Y perpendicular to the first extension direction X and, to a much lesser extent, in a third extension direction Z perpendicular to the first X and second extension direction Y. In other words, each right panel 20 or left panel 30 is a panel of small thickness in the third extension direction Z. Preferably, the thin metal sheet is a thin sheet of steel, less than 2 millimeters thick in the extension direction Z, even more preferably less than 1 millimeter thick.

Each of said right 20 and left 30 panels comprises at least one upper panel edge 21, 31 and one lower panel edge 22, 32 that delimit the panel extension along the first extension direction X.

Further, in the vicinity of said upper edge 21, 31 and lower edge 22, 32, each right or left panel 20, 30 comprises a fold 210, 220 of the metal sheet comprising a locking wall 210', 220'; 310' extending along the first extension direction X in a manner much less than the extension of the entire panel along the same first extension direction X and being spaced apart from the outer panel face 20". In other words, the locking wall 210', 220', 230' is a lip spaced apart from the outer panel face 20". Preferably, said lip extends along the first extension direction X by a length of less than 10% with respect to the extension of the entire panel along the same first extension direction X, even more preferably by a length of less than 5% with respect to the extension of the entire panel along the same first extension direction X.

On said locking wall 210', 220'; 310' fixing openings 211, 221, 311 are obtained for removably fixing a finishing element 4 or an equal modular unit 1.

The bottom panel 10 also comprises an inner panel face 10' facing the inner cavity I and an outer panel face 10'', not facing the inner cavity I. Further, the bottom panel 10 also preferably extends primarily according to a first extension direction X and a second extension direction Y perpendicular to the first extension direction X and, to a much lesser extent, in a third extension direction Z perpendicular to the first X and second extension direction Y.

In other words, each bottom 10, right 20, or left 30 panel has a small thickness in the third extension direction Z.

Further, preferably, each panel 10, 20, 30 has a square or rectangular plan shape.

Also each bottom panel 10 comprises at least one top panel edge 11 and one bottom panel edge 12 that delimit the panel extension along the first extension direction X.

According to a variant embodiment, near said top edge 11 and bottom edge 12, each bottom panel 10 comprises a fold of the metal sheet comprising a locking wall 110' extending along the first extension direction X in a manner much less than the extension of the entire panel along the same first extension direction X and being spaced apart from the outer panel face 10", in a manner entirely analogous to that previously described for the right panel 20 or the left panel 30. Therefore, in a similar manner, fixing openings 111 are provided on the locking wall 110' of the bottom panel 10 for removably fixing a finishing element 4 or an equal modular unit 1.

Preferably, the fixing openings 111, 211, 221, 311 are through openings.

According to an embodiment, not shown in the figures, the modular unit 1 comprises a reinforcing panel, joined to the bottom panel 10 and/or the right panel 20 and/or to the left panel 30 along the outer panel face 10", 20'', 30'', preferably joining by sandwiching or bonding. Preferably, in this variant, the reinforcing panel is sandwiched between the locking wall 110', 210', 220'; 310' and the outer panel face 10", 20'', 30". Preferably, the reinforcing panel is received in the U-shaped seat formed between the locking wall 110', 210', 220', 310' and the outer panel face 10", 20'', 30". Preferably, the reinforcing panel is only sandwiched between the locking wall 110', 210', 220', 310' and the outer panel face 10'', 20'', 30", without any additional bonding. Preferably, the reinforcing panel is made of a non-metallic material. For example, it is a multilayer material with synthetic resins, such as laminate or melamine multilayer or chipboard material, or it is plastic resin or melamine resin or honeycomb PET.

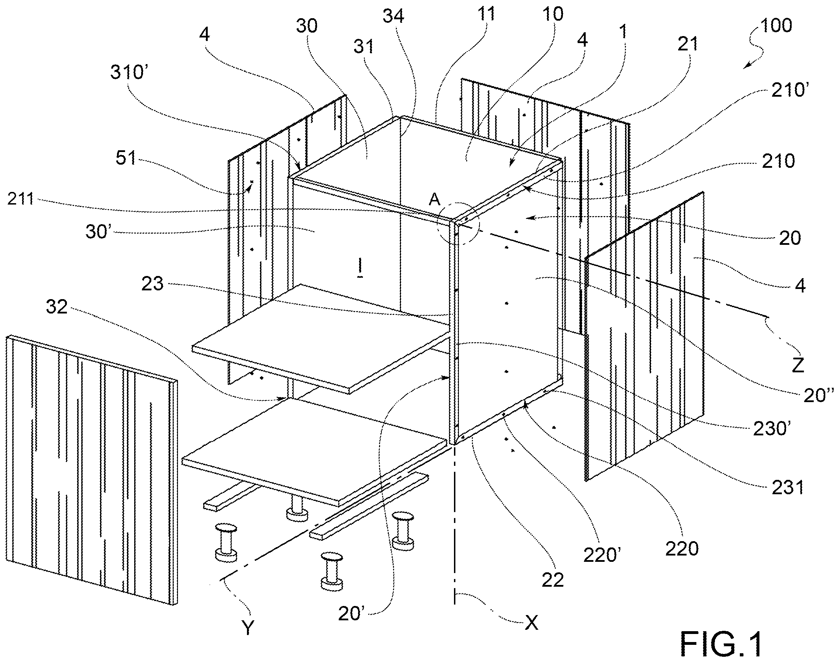

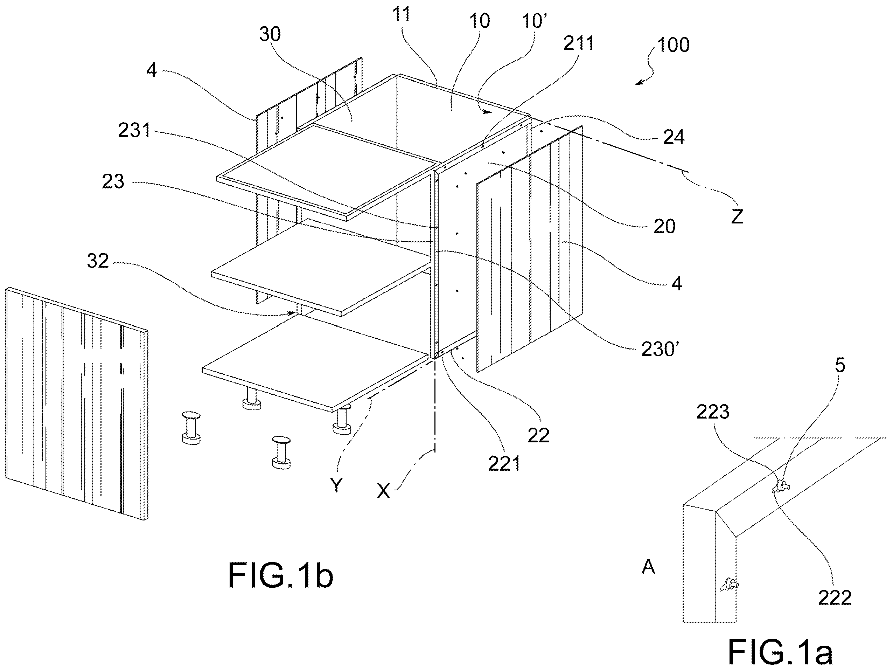

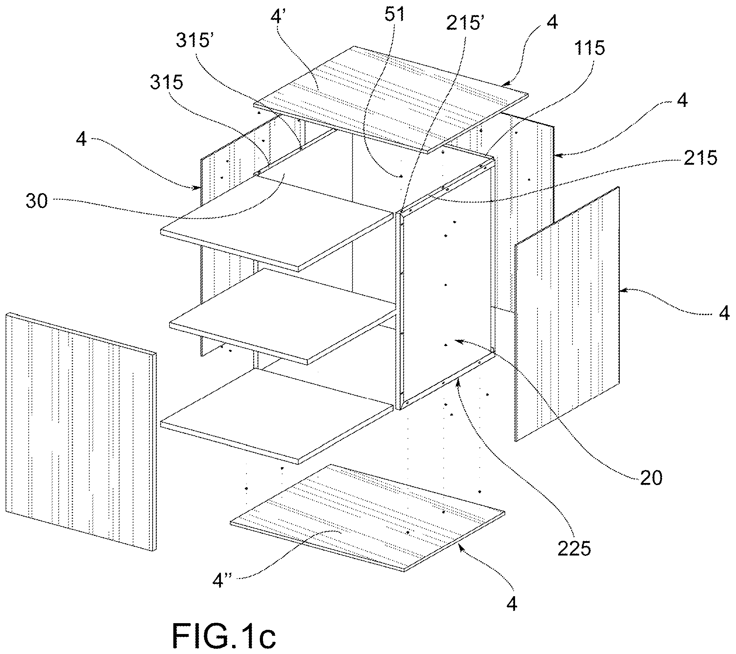

According to an advantageous embodiment, the bottom panel 10, the right panel 20, and the left panel 30 are made in one piece and obtained by folding a single sheet 1', preferably along weakenings 12', 13' of the sheet 1', as for example shown in Fig. 1 to 2a.

Preferably, each of said right panel 20 and left panel 30 comprises at least one left panel edge 23, 33 and one right panel edge 24, 34 delimiting the extension of the panel along the second extension direction Y. Near at least the left edge 23, 33 each of said left and right panels comprises an auxiliary fold 230, 330 of metal sheet comprising an auxiliary locking wall 230', 330' extending along the second extension direction Y in a manner much less than the extension of the entire panel along the same second extension direction Y. Said auxiliary locking wall 230', 330' is spaced apart from the outer panel face 20'', 30". In addition, auxiliary fixing openings 231, 331 are provided on said auxiliary locking wall 230', 330' for removably fixing a finishing element 4 or an equal modular unit 1.

Preferably, the auxiliary locking wall 230', 330' extends along the second extension direction Y by a length of less than 10% with respect to the extension of the entire panel along the same second extension direction Y, even more preferably by a length of less than 5% with respect to the extension of the entire panel along the same second extension direction Y.

It is clear that, in a variant embodiment, the bottom panel 10 also comprises an auxiliary fold 130 and an auxiliary locking wall 130', which is entirely analogous to that which is described in the preceding paragraph for the right panel 20 or left panel 30.

Preferably, the fixing openings 111, 211, 221 and the auxiliary fixing openings 131, 231, 331 are eyelets comprising a reduced section region 222 with respect to a normal section region 223 to allow a head of a screw or nail 5 to pass through the normal section region 223 and to prevent the screw or nail 5 from emerging from the reduced section region 222, as for example shown in Fig. 1a.

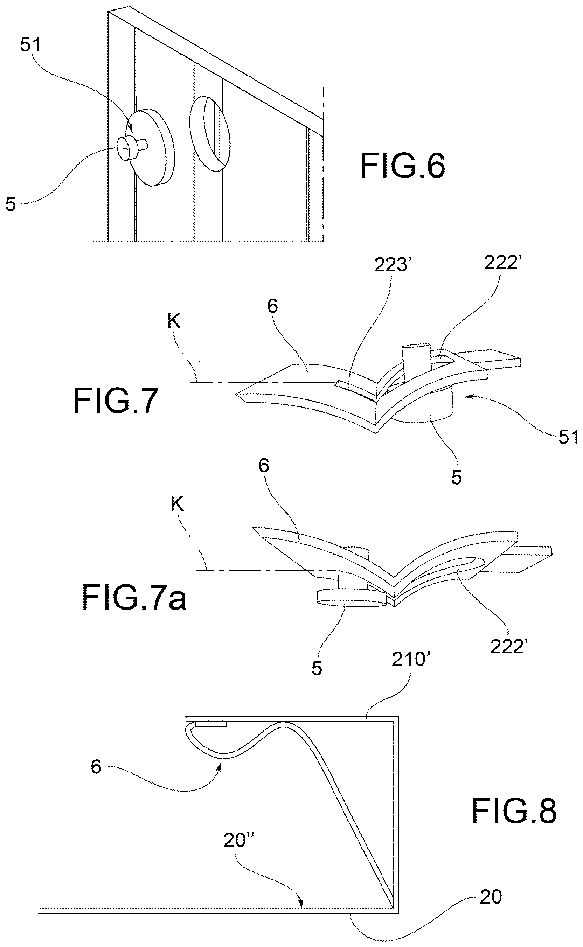

According to an embodiment, behind the locking wall 110'; 210', 220'; 310' and/or behind the auxiliary locking wall 130', 230', i.e., on the side of the locking wall or auxiliary locking wall facing the outer panel face 20'', in the vicinity of one or more of the fixing openings 111, 211, 221 or auxiliary fixing openings 131, 231 at least one elastic element 6 is positioned, which is suitable for undergoing elastic deformation and for "snap-fixing" onto the screw or nail 5, as for example shown in Fig. 7, 7a, and 8. This is done in such a way that the translation of the screw or nail 5 along a direction K perpendicular to the direction of insertion of the screw/nail into the fixing openings or auxiliary fixing openings is prevented. Said screw insertion direction is essentially parallel to the third extension direction Z.

According to an embodiment, for example shown in Fig. 7 and 7a, the elastic element 6 comprises an elastic element eyelet having a reduced section region 222' with respect to a normal section region 223' to allow a head of a screw or nail 5 to pass through the normal section region 223' and prevent the screw or nail 5 from emerging from the reduced section region 222'.

According to an embodiment, for example shown in Fig. 1c, the right panel 20 and/or the left panel 30 and/or the bottom panel 10, in the vicinity of the top panel edge 21, 31 or the bottom panel edge 22, 32 comprises a horizontal locking wall 115, 215, 315, 225 extending in a plane parallel to the third extension direction Z and possibly perpendicular only to the first extension direction **X.**

On said horizontal locking wall 115, 215, 315, 225 fixing openings 215', 315' are obtained for removably fixing a finishing element 4 or an equal modular unit 1. As shown in Fig. 1c, in this variant, the finishing element 4, when secured by the fixing elements 51 in the fixing openings 215', 315', constitutes a top covering finishing element 4', such as a kitchen top element or the like, or a bottom finishing element 4''.

As may be appreciated from the above description and figures, all finishing elements are therefore preferably fixed in a removable manner by means of the fixing elements 51 and, therefore, without the use of permanent fixing elements such as screws or nails or glues, which, if removed, would compromise the integrity of the finishing element or of the modular unit and, in any case, would require longer assembly/disassembly times.

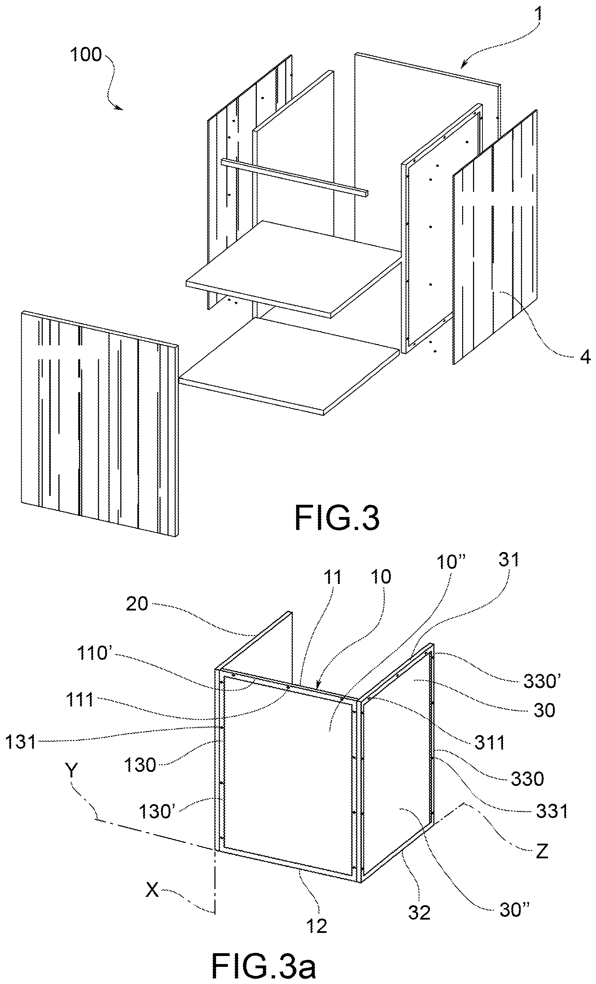

According to a further aspect of this invention, a box-shaped module 100, 101 for a piece of furniture, for example shown in Fig. 1, 1b, and 3, comprises a modular unit 1, described in the preceding paragraphs, and at least one finishing element 4 on which fixing elements 51 are anchored that are inserted into one or more fixing openings 211, 221 and/or one or more auxiliary fixing openings 231 of the modular unit 1.

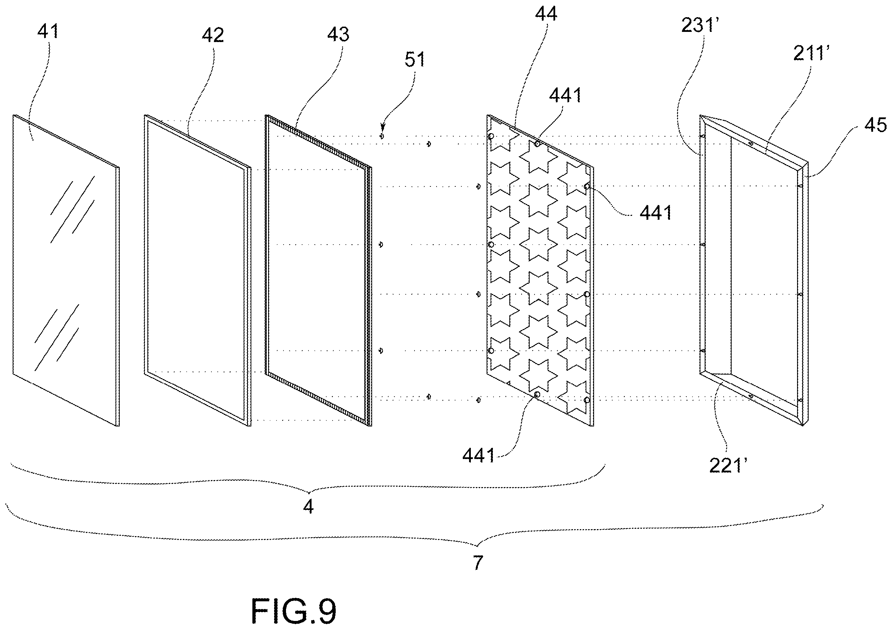

The finishing element 4 is shown in Fig. 9 to 12.

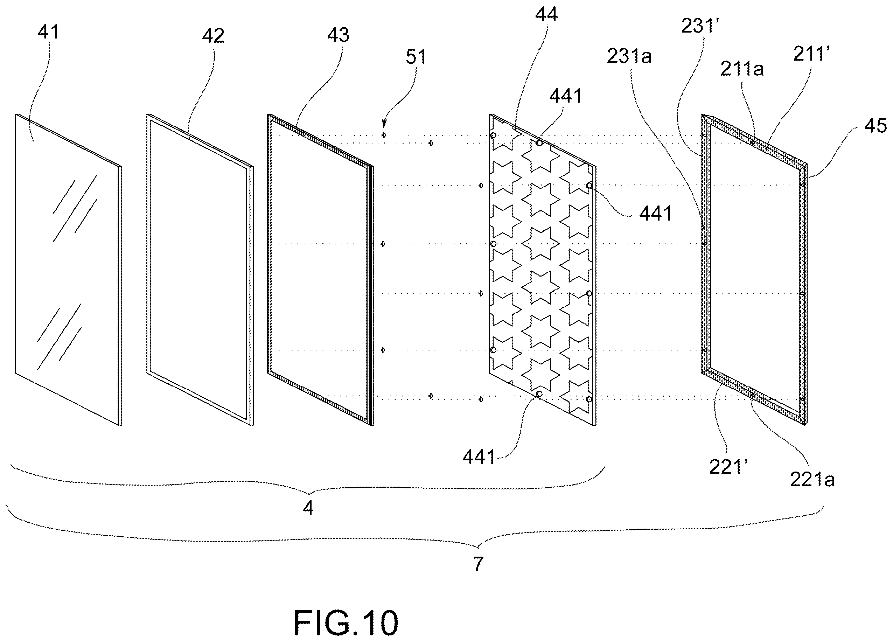

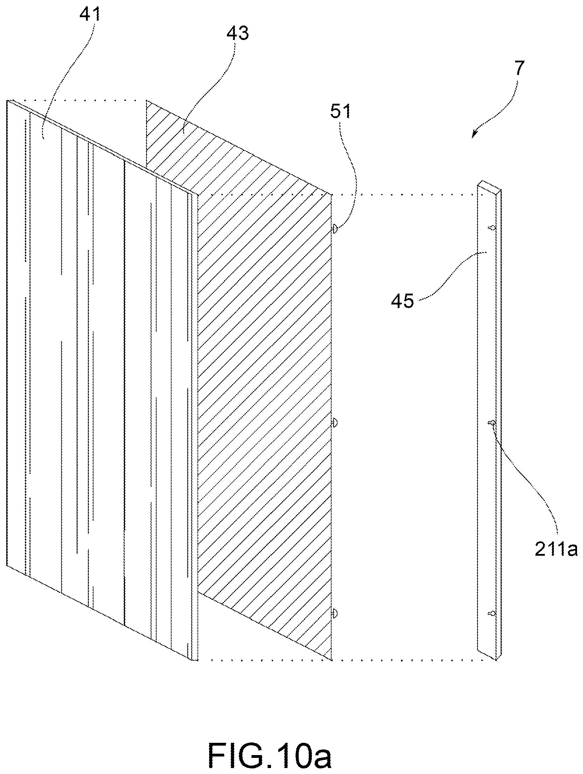

According to an example, for example with particular reference to Fig. 9 and 10, the finishing element 4 comprises an outer panel 41 made of a transparent or translucent material and a printed sheet 44 comprising a depiction or decoration. The printed sheet 44 is stably anchorable between the outer panel 41 and the locking wall 211, 221 and/or the auxiliary locking wall 231. Additionally, one or more fixing elements 51, such as nails or screws, suitable for being inserted into the fixing openings 211, 221 and/or in the auxiliary fixing openings 231 are fixed on the outer panel 41.

Preferably, the printed sheet 44 comprises anchoring openings 441 suitable for being crossed by the fixing elements 51.

Preferably, the printed sheet 44 is removably retained between the outer panel 41 and the locking wall 211, 221, without any further definitive fixing means, such as glue or screws, but is retained only by being trapped between the outer panel 41 and the locking wall 211, 221 and/or the auxiliary locking wall 231, and possibly supported by the fixing elements 51.

According to an advantageous embodiment, the outer panel 41 comprises a support frame 43 joined to the outer panel 41, preferably by an adhesive layer 42. In this variant, the one or more fixing elements 51 are attached to the support frame 43, and the printed sheet 44 is anchored to the support frame 43 by the one or more fixing elements 51. This provides adequate strength to the finishing element 4 while ensuring interchangeability of the printed sheet.

It is clear that in this discussion, decoration or depiction means any figurative element or even a simple solid color or texture or pattern.

According to an advantageous embodiment, a lighting element (not shown), for example an LED strip, is housed on the support frame 43, in the space between the printed sheet 44 and the outer panel 41, or on the finishing support frame 45, so as to backlight the outer panel 41.

According to a variant embodiment, the lighting element is housed behind the locking wall 210', 220'; 310' and/or behind the auxiliary locking wall 230', i.e., on the side of the locking or auxiliary locking wall facing the outer panel face 20".

Preferably, the finishing element 4 has a thickness of less than or equal to twenty-five millimeters, even more preferably less than or equal to eight millimeters or less than or equal to five millimeters.

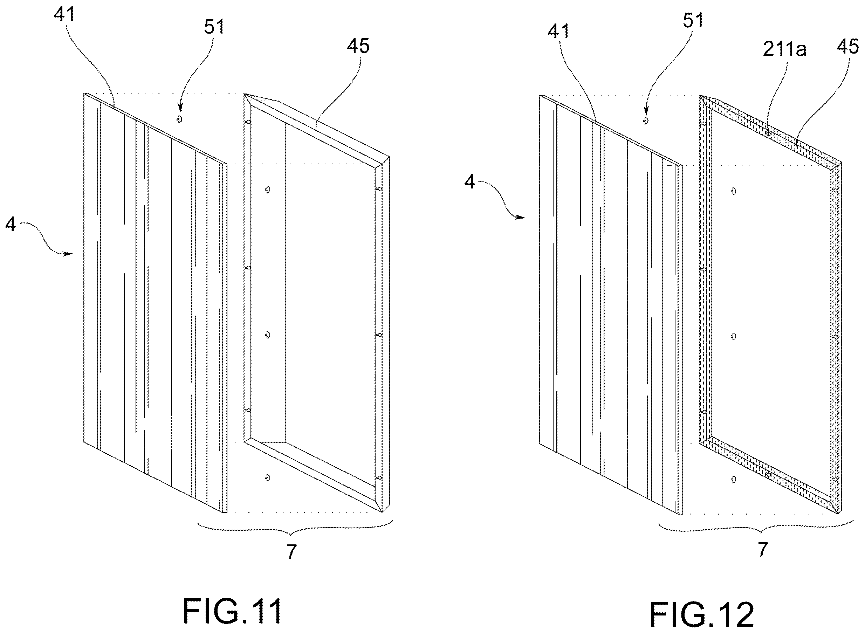

According to a further example shown in Fig. 11 and 12, the finishing element 4 comprises an outer panel 41 directly comprising an embodiment or decoration. One or more fixing elements 51, for example nails or screws, for removably anchoring to the locking wall 211, 221 and/or the auxiliary locking wall 231 are fixed to said outer panel 41. In this variant, the outer panel 41 has a thickness of less than or equal to twenty-five millimeters or more preferably less than or equal to eight millimeters, even more preferably less than or equal to five millimeters.

Preferably, the finishing element 4 is made of stone, or metal, or stoneware, or medium-density fiberboard (MDF), or polyvinyl chloride (PVC), or polyethylene or polyethylene terephthalate (PET), or glass, or HPL (high pressure laminate), or polycarbonate.

As will be understood from the preceding paragraphs, it is therefore an object of this invention to provide a door 7 for a piece of furniture, anchorable in a rotatable manner to the piece of furniture or in any case to a modular unit 1 of a piece of furniture.

It is clear that the door 7 of this invention is anchorable to a piece of furniture or a modular unit 1 described herein, but it is also clear that the door 7 is anchorable to any piece of furniture of the prior art, for example made with wooden modules, for example by means of suitable hinges. Therefore, the door 7 of this invention, is not to be considered strictly bound to engage with a modular unit 1 described herein. The door 7 comprises a finishing element 4, according to the previously described variants, and a finishing support frame 45 preferably made of aluminum section bar. Said finishing support frame 45 comprises a finishing locking wall 211', 221' and/or an auxiliary finishing locking wall 231'. One or more fixing elements 51 of the outer panel 41 removably fix the outer panel 41 to the finishing locking wall 211', 221' and/or the auxiliary finishing locking wall 231'.

In the variant wherein the finishing element 4 comprises the printed sheet 44, said printed sheet 44 is anchored between the outer panel 41 and the finishing locking wall 211', 221' and/or the auxiliary finishing locking wall 231', preferably being crossed by the fixing elements 51, which allow it to be held in place and prevent it from slipping.

It is clear that, similarly to the modular unit 1, behind the finishing locking wall 211', 221' and/or the auxiliary finishing locking wall 231', in the vicinity of one or more finishing fixing openings 211a, 221a, or auxiliary finishing fixing openings 231a at least one elastic element 6 is positioned suitable for undergoing elastic deformation and for "snap-fixing" onto one or more fixing elements 51, such as a nail or screw 5. This is done in such a way that translation of the screw or nail 5 along a direction K perpendicular to the direction of insertion of the screw/nail into the finishing fixing openings or auxiliary finishing fixing openings is prevented.

Preferably, therefore, the features of the locking walls 210', 220'; 310' and auxiliary locking walls, as well as the fixing openings 211, 221, 311 and auxiliary fixing openings and their interactions with the fixing elements 51, are to be considered equally understood and valid in the finishing locking wall 211', 221', in the auxiliary finishing locking wall 231', and in the finishing fixing openings 211a, 221a, or auxiliary finishing fixing openings 231a. This ensures full interchangeability compatibility between finishing elements 4 applicable to the right, left, lower, and bottom panels of the modular unit, as well as the finishing support frame 45 for the door 7.

Preferably, the door 7 comprises a release button (not shown), suitable for activating or deactivating the elastic element 6, i.e., mechanically interfering therewith, so as to allow the release of the outer panel 41.

It is also clear that for the person skilled in the art, the term "support frame" means any frame or a simple profile or a more complex metal structure.

For example, according to the invention, e.g., shown in Fig. 10a, the finishing support frame 45 is simply a metal bar, preferably made of aluminum, having preferential extension in the first extension direction X and does not have any further support components, i.e., it is not shaped, for example, as a rectangular frame, as for example shown in other variant embodiments. In this variant, preferably, the support frame 43 joined to the outer panel 41, preferably by an adhesive layer 42, is a thin metal sheet in the form of a frame or in the form of an entire thin metal sheet. Furthermore, in this variant, preferably the one or more fixing elements 51 are fixed to the thin metal sheet, for example they are welded or press-fit or glued. This results in a lightweight, extremely thin, strong cabinet door with all the advantages provided by a finishing element. It is clear that all of the previously described outer panel 41 and printed sheet 44 variants are applicable to this support frame 43 and finishing support frame 45 variant; moreover, all of the finishing element 4 variants described in this discussion are applicable with the difference that the support frame 43 is either a thin metal sheet in the form of a frame or in the form of a whole thin metal sheet.

Preferably, the finishing support frame 45 integrally houses or directly supports (e.g., is fixed to) one or more hinges for moving the door 7.

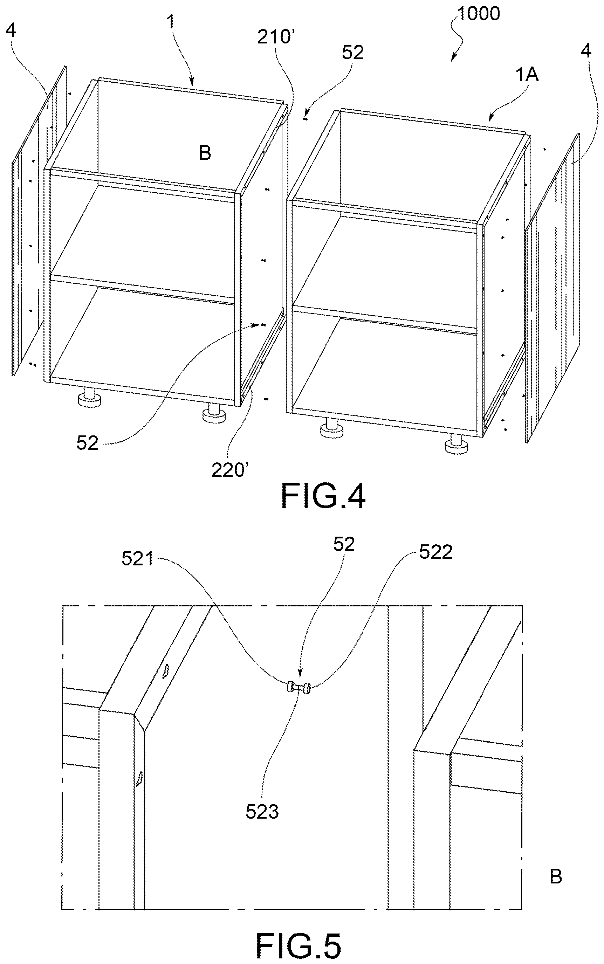

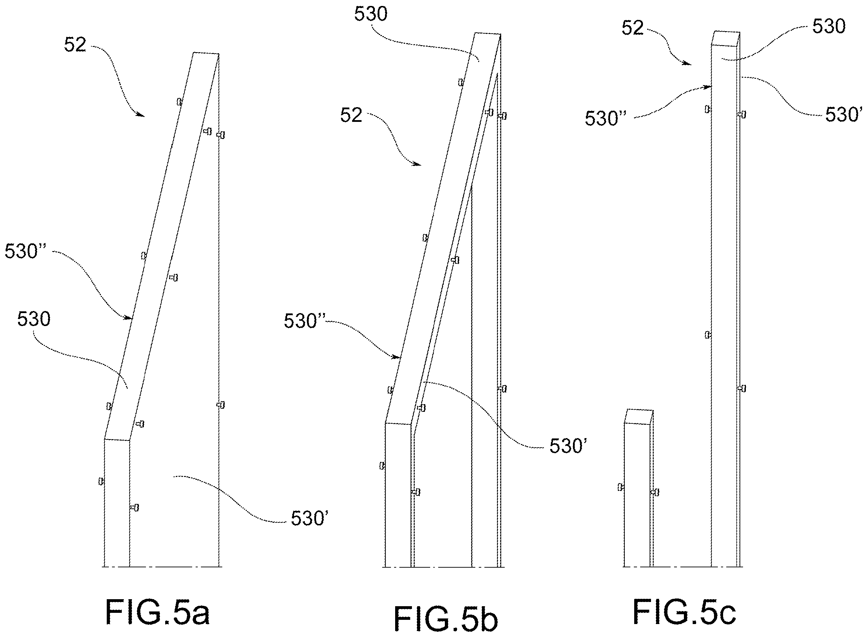

Additionally, it is an object of this invention to provide a piece of furniture 1000, for example shown in Fig. 4 comprising at least two modular units 1, 1A described in the preceding paragraphs, joined together by module fixing elements 52 inserted into one or more fixing openings 211, 221 and/or one or more auxiliary fixing openings 231 of each modular unit 1, 1A. The module fixing elements are preferably pins or nails having a double head, as for example shown in Fig. 5. In other words, pins or nails comprise a left head 521 and a right head 522 joined together by a central connecting member 523 having a reduced cross-section with respect to the cross-section of the head. The left head 521 is suitable for being inserted into the fixing openings 211, 221 and/or auxiliary fixing openings 231 of one 1 of the two modular units 1, 1A, while the right head 522 is suitable for being inserted into the fixing openings 211, 221 and/or auxiliary fixing openings 231 of the other 1A of the two modular units 1, 1A, adjacent to the first. In this way, it is possible to obtain a quick, simple, and effective coupling of the modules, without the need to provide for onerous screw fixing operations that would, moreover, ruin the modular units.

According to a variant embodiment, for example shown in Fig. 5a to 5c, the module fixing elements 52 comprise a fixing frame 530, comprising a right frame face 530' and a left frame face 530'', which are opposite each other. One or more pins or nails, preferably having an enlarged head, and suitable for being inserted into the fixing openings 211, 221 and/or auxiliary fixing openings 231 of one 1 of the two modular units 1, 1A are fixed or formed into each right frame face 530' and left frame face 530''. In particular, when the fixing frame 530 is installed between two modular units 1, 1A, the pins or nails fixed to the right frame face 530' are inserted into the fixing openings 211, 221 and/or auxiliary fixing openings 231 of one of the two modular units 1, 1A, while the pins or nails fixed to the left frame face 530'' are inserted into the fixing openings 211, 221 and/or auxiliary fixing openings 231 of the other of the two modular units 1, 1A. In this way, a quick, simple, and effective coupling of the modules is obtained, without the need to provide for onerous screw fixing operations, and at the same time it is possible to meet any need for padding between the modules, also ensuring greater flexibility in the design and filling of spaces wherein the piece of furniture is housed.

Further, an aspect of this invention is a method for making a modular unit 1, previously described.

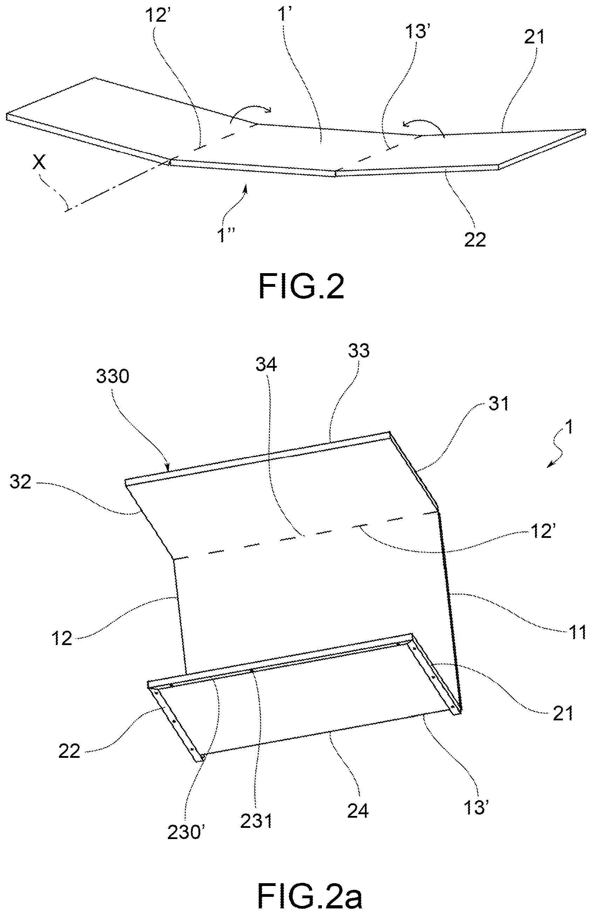

The aforesaid method is best understood in reference to Fig. 2 and 2a and comprises the following operational steps:
- providing a metal sheet 1', preferably having weakenings 12', 13' extending along the first extension direction X, and comprising an upper edge 21 and a lower edge 22, wherein in the vicinity of said lower edge 22 and upper edge 21, said metal sheet 1' comprises a fold 210, 220 of the metal sheet comprising a locking wall 210', 220'; 310' extending along the first extension direction X in a manner much less than the extension of the entire metal sheet 1' along said first extension direction X and being spaced apart from an outer sheet face 1";
- folding the metal sheet 1', preferably along the weakenings 12, 13', to obtain the modular unit 1 so that the bottom panel 10 ends up between the right panel 20 and the left panel 30 and, preferably, between two weakenings 12', 13'.

It is clear that in the case of the presence of weakenings in the sheet metal, such as incisions, notches, holes or micro-holes or the like, it is easier to fold the metal sheet at the site of installation. In the case of the absence of such weakenings, however, it is preferable to carry out the folding or at least a partial folding of the sheet metal at the factory before transport to the site of installation.

It is clear that the aforesaid construction method refers to a variant embodiment wherein the modular unit 1 is made from a one-piece sheet 1'. However, it is clear that, according to another construction method, the modular unit 1 may also be made by joining together three distinct bottom panels 10, right panels 20, and left panels 30, as for example shown in Fig. 3 and 3a.

Moreover, after making the modular unit 1, the method comprises the step of coupling one or more finishing elements 4 to the modular unit by inserting the fixing elements 51 into one or more fixing openings 211, 221 or auxiliary fixing openings 231, so as to make a box-shaped module.

Innovatively, this invention overcomes the drawbacks of the doors and pieces of furniture of the prior art.

In an extremely innovative way, this invention allows manufactured articles to be redesigned and customized according to the particular final destination, due to the easy versatility of the doors and to their simultaneous strength of construction and lightness.

The extreme modularity and interchangeability of the finishing elements and doors, together with a light, thin, and traditional screwless structure results in a piece of furniture with unique and distinctive features in the sector.

In particular, for example, it is possible at any time to rearrange the arrangement of the printed sheets on the door or in the finishing elements without any decoration or gluing operations or without any marks or holes remaining in the panels.

Moreover, it is possible to obtain multicolor modular units, variable at will in the same piece of furniture. In particular, in the same box-shaped module it is possible to have faces with different colors and/or materials, as well as doors with different colors and materials without special and complex maintenance operations.

It is clear that each finishing 4 or door 7 element may also cover only partially or completely the support frame or the right panel 20, left panel 30, or bottom panel 10. This allows for a variability of decorations to be obtained even in the same door or in the same side of the box-shaped module.

In addition, in a particularly advantageous way, the modular unit, the finishing element, or the door, for the parts made of metal sheet, are environmentally friendly, completely recyclable, non-flammable, and water-resistant. In particular, being made of metal sheet such as steel or aluminum, they are recyclable, as well as being solid, durable, and easily washable.

In particular, the presence of a folded sheet equipped with fixing openings allows an effective and simple coupling between the modular unit and the finishing element, as well as between adjacent modular units or between the finishing element and the support frame for constructing the door.

This further allows for a rapid installation of an entire piece of furniture without the need for costly fixing operations using screws of different sizes and pins.

Moreover, due to the possibility of repositioning the finishing elements on the modular unit in a simple way, it is possible to change the outer finish of the furniture over time, as well as vary the type of decoration of said piece of furniture, with the possibility of obtaining various shapes and different colors.

In addition, the possibility of changing only the printed sheet of the finishing element is advantageous, as it allows the aesthetic appearance of the furniture to be modified at will over time, without having to change an entire side panel or even an entire module. Furthermore, the same benefit applies to the door.

Also advantageously, making the modular unit in metal sheet of small thickness allows an agile and easy transport, as well as an agile assembly operation, being extremely light compared to the wooden modular units of the prior art.

In addition, the variant of a modular unit made by means of the metal sheet in a single body folded along the weakenings further facilitates the storage and transportation operations of the modular units. In effect, unfolded sheets may be easily stacked and stored in extremely small spaces with respect to a pre-assembled box-shaped modular unit that is typical of the prior art. Similarly, it is also possible to collect and assemble numerous panels to make a piece of furniture.

The operator installing the modular unit according to this invention need only transport the unfolded sheets to the installation site of the module and proceed with the folding operation on site to obtain the box-shaped module along the weakenings on the sheet metal.

Thus, in an extremely innovative way the modular unit allows manufactured items to be redesigned and customized according to the particular final destination, without having to make custom pieces or decorations and allowing the space of the room to be used in a simple and optimal way. The extreme modularity and interchangeability of the finishing elements and doors, together with a light, thin, and screwless structure, is unique in the industry.

Moreover, it is possible at any time to rearrange the arrangement of the printed sheets without any decorating or gluing operations or without any marks or holes remaining in the panels.

Moreover, it is possible to obtain multicolor modular units, variable at will in the same piece of furniture. In particular, it is possible to have faces in the same box-shaped module with different colors and/or materials.

It is clear that each finishing element 4 may also cover only partially or completely the support frame or the right panel 20, left panel 30, or bottom panel 10. This allows for a variability of decorations to be obtained even in the same door or in the same side of the box-shaped module.

Also advantageously, the possibility of making finishing elements of limited thickness, for example down to dimensions of less than 8 millimeters, allows an easy transportability of panels and doors and therefore an easy distribution in many places, even at a great distance.

A person skilled in the art may, in order to meet specific needs, make several changes to the embodiments of this invention or substitutions of elements with other functionally equivalent ones.

These variants are also contained within the scope of protection as defined by the following claims.

## Claims

1. A door (7) for a piece of furniture, which is rotatably anchorable to a piece of furniture (1000), for example for a modular kitchen, said door (7) comprising:
an outer panel (41) made of a transparent or translucent material,
a support frame (43) joined to the outer panel (41);
a printed sheet (44), comprising a depiction or decoration, a finishing support frame (45) comprising a finishing locking wall (211', 221'),
one or more fixing elements (51), such as nails or screws, being fixed onto said support frame (43), which are suitable for fixing the outer panel (41) to the finishing locking wall (211', 221') in a removable manner,
said printed sheet (44) being anchored to the support frame (43) by means of the one or more fixing elements (51),
wherein the finishing support frame (45) is a single metal bar having preferential extension in a first extension direction (X) and which does not have any further support components.

2. Door (7) according to claim 1, wherein the printed sheet (44) comprises anchoring openings (441) suitable for being crossed by the fixing elements (51).

3. Door (7) according to claim 1 or 2, wherein a lighting element, such as a led strip, is accommodated on the support frame (43), in the space between the printed sheet (44) and the outer panel (41), or on the finishing support frame (45).

4. A door (7) which is rotatably anchorable to a piece of furniture (1000), for example for a modular kitchen, said door (7) comprising:
an outer panel (41) comprising a depiction or decoration, a finishing support frame (45) comprising a finishing locking wall (211', 221'),
one or more fixing elements (51), such as nails or screws, being fixed onto said outer panel (41), which removably fix the outer panel (41) to the finishing locking wall (211', 221')
said outer panel (41) having a thickness which is lower than or equal to twenty-five millimeters, preferably lower than or equal to eight millimeters,
**characterized in that** the finishing support frame (45) is a single metal bar having preferential extension in a first extension direction (X) and which does not have any further support components.

5. Door (7) according to any one of the preceding claims, wherein the outer panel (41) is made of stone, or metal, or stoneware, or MDF, or PVC, or PET, or glass.

6. Door (7) according to any one of the preceding claims, comprising one or more finishing fixing openings (211a, 221a) obtained in the finishing locking wall (211', 221') wherein, at least one elastic element (6) is positioned behind the finishing locking wall (211', 221'), close to the finishing fixing openings (211a, 221a), suitable for undergoing an elastic deformation and snap-fix one or more fixing elements (51), such as a nail or a screw (5), so that the screw or nail (5) is prevented from translating along a direction perpendicular K to the insertion direction of the screw/nail in the finishing fixing openings.

7. A piece of furniture (1000), comprising at least two modular units (1), each modular unit (1, 1A) of said modular units (1, 1A) comprising:
a bottom panel (10), a right panel (20), and a left panel (30), made of a thin metal sheet and coupled to one another defining an open box-shaped inner cavity (I), each of said right (20) and left (30) panels comprising an inner panel face (20', 30'), facing the inner cavity (I), and an outer panel face (20", 30"), not facing the inner cavity (I) and extending mainly according to a first extension direction (X) and a second extension direction (Y) perpendicular to the first extension direction (X) and
extending much less in a third extension direction (Z) perpendicular to the first (X) and to the second (Y) extension directions, i.e. being of a small thickness in the third extension direction (Z),
wherein each of said right (20) and left (30) panels comprises at least one upper panel edge (21, 31) and a lower panel edge (22, 32) which delimit the extension of the panel along the first extension direction (X),
wherein, close to said upper edges (21, 31) and lower edges (22, 32), each panel comprises a fold (210, 220) of the metal sheet comprising a locking wall (210', 220'; 310') extending along the first extension direction (X) much less than the extension of the entire panel along the same first extension direction (X) and being spaced apart from the outer panel face (20"),
fixing openings (211, 221) being obtained on said locking wall (210', 220'; 310') for removably fixing an equal modular unit (1),
wherein the at least two modular units (1, 1A) are joined to each other by means of module fixing elements (52) inserted into one or more of the fixing openings (211, 221) and/or auxiliary fixing openings (231) of each of said at least two modular units (1), and wherein
said piece of furniture comprises at least one door (7) according to any one of claims 1 to 6, rotatably anchored to at least one of the modular units (1, 1A).

8. Piece of furniture (1000) according to claim 7, wherein the bottom panel (10), the right panel (20) and the left panel (30) are made in a single piece and obtained by folding a single sheet (1') along weakenings (12', 13') of the sheet (1').

9. Piece of furniture (1000) according to claim 7 or 8, wherein each of said right (20) and left (30) panels comprises at least one left panel edge (23, 33) and one right panel edge (24, 34) which delimit the extension of the panel along the second extension direction (Y),
wherein, close to at least said left edge (23, 33), each panel comprises an auxiliary fold (230, 330) of the metal sheet comprising an auxiliary locking wall (230', 330') extending along the second extension direction (Y) much less than the extension of the entire panel along the same second extension direction (Y) and being spaced apart from the outer panel face (20"),
auxiliary fixing openings (231) being obtained on said auxiliary locking wall (230', 330') for removably fixing a finishing element (4) or an equal modular unit (1),

10. Piece of furniture (1000) according to any one of claims 7 to 9, wherein the fixing openings (211, 221) and the auxiliary fixing openings (231) are eyelets comprising a reduced section region (222) as compared to a normal section region (223) to allow a head of a screw or nail (5) to pass from the normal section region (223) and prevent the screw or nail (5) from exiting the reduced section region (222).

11. Piece of furniture (1000) according to claim 10, wherein at least one plastic element (6) is positioned behind the locking wall (210', 220'; 310') and/or behind the auxiliary locking wall (230'), i.e. on the side of the locking wall facing the outer panel face (20"), close to one or more of the fixing openings (211, 221) or auxiliary fixing openings (231), suitable for undergoing an elastic deformation and snap-fix the screw or nail (5) so that the translation of the screw or nail (5) is prevented along a direction perpendicular (K) to the insertion direction of the screw into the fixing openings or auxiliary fixing openings, said insertion direction being substantially parallel to the third extension direction (Z).

12. Piece of furniture according to claim 11, wherein the elastic element (6) comprises an elastic element eyelet having a reduced section region (222') as compared to a normal section region (223') to allow a head of a screw or nail (5) to pass from the normal section region (223') and prevent the screw or nail (5) from exiting the reduced section region (222').

13. Piece of furniture according to any one of claims 7 to 12, wherein the right panel (20) and/or the left panel (30) and/or the bottom panel (10), close to the upper panel edge (21, 31) or the lower panel edge (22, 32), comprises a horizontal locking wall (115, 215, 315, 225) which extends on a plane parallel to the third extension direction (Z) and optionally perpendicular only to the first extension direction (X), fixing openings (215', 315') being obtained on said horizontal locking wall (115, 215, 315, 225) for removably fixing a finishing element (4) or an equal modular unit (1).

14. Piece of furniture according to any one of claims 7 to 13 comprising at least one finishing element (4) onto which fixing elements (51) inserted into one or more fixing openings (211, 221) or auxiliary fixing openings (231) are anchored.

## Patentansprüche

1. Tür (7) für ein Möbel, die drehbar an einem Möbel (1000) verankerbar ist, zum Beispiel für eine Modulküche, wobei die Tür (7) umfasst:
eine Außenplatte (41) aus einem transparenten oder lichtdurchlässigen Material, einen mit der Außenplatte (41) verbundenen Stützrahmen (43);
einen bedruckten Bogen (44), der eine Abbildung oder Dekoration umfasst,
einen Abschluss-Stützrahmen (45), der eine Abschluss-Arretierwand (211', 221') umfasst,
ein oder mehrere Befestigungselemente (51), wie etwa Nägel oder Schrauben, die an dem Stützrahmen (43) befestigt sind und dazu geeignet sind, die Außenplatte (41) an der Abschluss-Arretierwand (211', 221') abnehmbar zu befestigen, wobei der bedruckte Bogen (44) mittels des einen oder der mehreren Befestigungselemente (51) an dem Stützrahmen (43) verankert ist, wobei
der Abschluss-Stützrahmen (45) eine einzelne Metallstange ist, die eine bevorzugte Erstreckung in einer ersten Erstreckungsrichtung (X) aufweist und die keine weiteren Stützkomponenten aufweist.

2. Tür (7) nach Anspruch 1, wobei der bedruckte Bogen (44) Verankerungsöffnungen (441) umfasst, die dazu geeignet sind, von den Befestigungselementen (51) durchquert zu werden.

3. Tür (7) nach Anspruch 1 oder 2, wobei ein Beleuchtungselement, wie etwa ein LED-Streifen, auf dem Stützrahmen (43) in dem Raum zwischen dem bedruckten Bogen (44) und der Außenplatte (41) oder auf dem Abschluss-Stützrahmen (45) untergebracht ist.

4. Tür (7), die drehbar an einem Möbel (1000) verankerbar ist, zum Beispiel für eine Modulküche, wobei die Tür (7) umfasst:
eine Außenplatte (41), die eine Abbildung oder Dekoration umfasst,
einen Abschluss-Stützrahmen (45), der eine Abschluss-Arretierwand (211', 221') umfasst,
ein oder mehrere Befestigungselemente (51), wie etwa Nägel oder Schrauben, die an der Außenplatte (41) befestigt sind und die Außenplatte (41) abnehmbar an der Abschluss-Arretierwand (211', 221') befestigen,
wobei die Außenplatte (41) eine Dicke aufweist, die kleiner als oder gleich fünfundzwanzig Millimeter ist, vorzugsweise kleiner als oder gleich acht Millimeter,
**dadurch gekennzeichnet, dass** der Abschluss-Stützrahmen (45) eine einzelne Metallstange ist, die eine bevorzugte Erstreckung in einer ersten Erstreckungsrichtung (X) aufweist und die keine weiteren Stützkomponenten aufweist.

5. Tür (7) nach einem der vorhergehenden Ansprüche, wobei die Außenplatte (41) aus Stein oder Metall oder Steinzeug oder MDF oder PVC oder PET oder Glas gefertigt ist.

6. Tür (7) nach einem der vorhergehenden Ansprüche,
umfassend eine oder mehrere Abschluss-Befestigungsöffnungen (211a, 221a), die in der Abschluss-Arretierwand (211', 221') ausgebildet sind, wobei mindestens ein elastisches Element (6) hinter der Abschluss-Arretierwand (211', 221') nahe den Abschluss-Befestigungsöffnungen (211a, 221a) positioniert ist, das dazu geeignet ist, eine elastische Verformung zu erfahren und ein oder mehrere Befestigungselemente (51), wie etwa einen Nagel oder eine Schraube (5), durch Einrasten zu fixieren, sodass die Schraube oder der Nagel (5) daran gehindert wird, entlang einer Richtung K senkrecht zur Einführrichtung der Schraube/des Nagels in die Abschluss-Befestigungsöffnungen verschoben zu werden.

7. Möbel (1000), umfassend mindestens zwei Moduleinheiten (1), wobei jede Moduleinheit (1, 1A) der Moduleinheiten (1, 1A) umfasst:
eine Bodenplatte (10), eine rechte Platte (20) und eine linke Platte (30), die aus einem dünnen Metallblech gefertigt und miteinander gekoppelt sind, wodurch ein offener, kastenförmiger Innenhohlraum (I) definiert wird, wobei jede der rechten (20) und linken (30) Platte eine Innenplattenfläche (20', 30'), die dem Innenhohlraum (I) zugewandt ist, und eine Außenplattenfläche (20", 30") umfasst, die dem Innenhohlraum (I) nicht zugewandt ist und sich hauptsächlich gemäß einer ersten Erstreckungsrichtung (X) und einer zweiten Erstreckungsrichtung (Y) senkrecht zu der ersten Erstreckungsrichtung (X) erstreckt und sich viel weniger in einer dritten Erstreckungsrichtung (Z) senkrecht zu der ersten (X) und zu der zweiten (Y) Erstreckungsrichtung erstreckt, d. h. von geringer Dicke in der dritten Erstreckungsrichtung (Z) ist,
wobei jede der rechten (20) und linken (30) Platte mindestens eine obere Plattenkante (21, 31) und eine untere Plattenkante (22, 32) umfasst, welche die Erstreckung der Platte entlang der ersten Erstreckungsrichtung (X) begrenzen, wobei jede Platte nahe den oberen Kanten (21, 31) und unteren Kanten (22, 32) eine Faltung (210, 220) des Metallblechs umfasst, die eine Arretierwand (210', 220'; 310') umfasst, die sich entlang der ersten Erstreckungsrichtung (X) viel weniger als die Erstreckung der gesamten Platte entlang derselben ersten Erstreckungsrichtung (X) erstreckt und von der Außenplattenfläche (20") beabstandet ist,
wobei Befestigungsöffnungen (211, 221) an der Arretierwand (210', 220'; 310') zum abnehmbaren Befestigen einer gleichen Moduleinheit (1) ausgebildet sind,
wobei die mindestens zwei Moduleinheiten (1, 1A) mittels Modulbefestigungselementen (52), die in eine oder mehrere der Befestigungsöffnungen (211, 221) und/oder Hilfsbefestigungsöffnungen (231) jeder der mindestens zwei Moduleinheiten (1) eingeführt sind, miteinander verbunden sind, und wobei
das Möbel mindestens eine Tür (7) nach einem der Ansprüche 1 bis 6 umfasst, die drehbar an mindestens einer der Moduleinheiten (1, 1A) verankert ist.

8. Möbel (1000) nach Anspruch 7, wobei die Bodenplatte (10), die rechte Platte (20) und die linke Platte (30) einstückig gefertigt und durch Falten eines einzelnen Blechs (1') entlang von Schwächungen (12', 13') des Blechs (1') ausgebildet werden.

9. Möbel (1000) nach Anspruch 7 oder 8,
wobei jede der rechten (20) und linken (30) Platte mindestens eine linke Plattenkante (23, 33) und eine rechte Plattenkante (24, 34) umfasst, welche die Erstreckung der Platte entlang der zweiten Erstreckungsrichtung (Y) begrenzen,
wobei jede Platte nahe mindestens der linken Kante (23, 33) eine Hilfsfaltung (230, 330) des Metallblechs umfasst, die eine Hilfsarretierwand (230', 330') umfasst, die sich entlang der zweiten Erstreckungsrichtung (Y) viel weniger als die Erstreckung der gesamten Platte entlang derselben zweiten Erstreckungsrichtung (Y) erstreckt und von der Außenplattenfläche (20") beabstandet ist,
wobei Hilfsbefestigungsöffnungen (231) an der Hilfsarretierwand (230', 330') zum abnehmbaren Befestigen eines Abschlusselements (4) oder einer gleichen Moduleinheit (1) ausgebildet sind.

10. Möbel (1000) nach einem der Ansprüche 7 bis 9, wobei die Befestigungsöffnungen (211, 221) und die Hilfsbefestigungsöffnungen (231) Ösen sind, die einen Bereich mit reduziertem Querschnitt (222) im Vergleich zu einem Bereich mit normalem Querschnitt (223) umfassen, um es einem Kopf einer Schraube oder eines Nagels (5) zu ermöglichen, den Bereich mit normalem Querschnitt (223) zu passieren, und zu verhindern, dass die Schraube oder der Nagel (5) aus dem Bereich mit reduziertem Querschnitt (222) hervortritt.

11. Möbel (1000) nach Anspruch 10, wobei mindestens ein Kunststoffelement (6) hinter der Arretierwand (210', 220'; 310') und/oder hinter der Hilfsarretierwand (230') positioniert ist, d. h. auf der Seite der Arretierwand, die der Außenplattenfläche (20") zugewandt ist, nahe einer oder mehreren der Befestigungsöffnungen (211, 221) oder Hilfsbefestigungsöffnungen (231), das dazu geeignet ist, eine elastische Verformung zu erfahren und die Schraube oder den Nagel (5) durch Einrasten zu fixieren, sodass die Verschiebung der Schraube oder des Nagels (5) entlang einer Richtung (K) senkrecht zur Einführrichtung der Schraube in die Befestigungsöffnungen oder Hilfsbefestigungsöffnungen verhindert wird, wobei die Einführrichtung im Wesentlichen parallel zu der dritten Erstreckungsrichtung (Z) verläuft.

12. Möbel nach Anspruch 11, wobei das elastische Element (6) eine Öse des elastischen Elements umfasst, die einen Bereich mit reduziertem Querschnitt (222') im Vergleich zu einem Bereich mit normalem Querschnitt (223') aufweist, um es einem Kopf einer Schraube oder eines Nagels (5) zu ermöglichen, den Bereich mit normalem Querschnitt (223') zu passieren, und zu verhindern, dass die Schraube oder der Nagel (5) aus dem Bereich mit reduziertem Querschnitt (222') hervortritt.

13. Möbel nach einem der Ansprüche 7 bis 12, wobei die rechte Platte (20) und/oder die linke Platte (30) und/oder die Bodenplatte (10) nahe der oberen Plattenkante (21, 31) oder der unteren Plattenkante (22, 32) eine horizontale Arretierwand (115, 215, 315, 225) umfasst, die sich in einer Ebene parallel zu der dritten Erstreckungsrichtung (Z) und optional senkrecht nur zu der ersten Erstreckungsrichtung (X) erstreckt, wobei Befestigungsöffnungen (215', 315') an der horizontalen Arretierwand (115, 215, 315, 225) zum abnehmbaren Befestigen eines Abschlusselements (4) oder einer gleichen Moduleinheit (1) erhalten sind.

14. Möbel nach einem der Ansprüche 7 bis 13, umfassend mindestens ein Abschlusselement (4), an dem Befestigungselemente (51) verankert sind, welche in eine oder mehrere Befestigungsöffnungen (211, 221) oder Hilfsbefestigungsöffnungen (231) eingeführt sind.

## Revendications

1. Porte (7) pour un meuble, qui est ancrable de manière rotative à un meuble (1000), par exemple pour une cuisine modulaire, ladite porte (7) comprenant :
un panneau externe (41) fait d'un matériau transparent ou translucide, un cadre de support (43) joint au panneau externe (41) ;
une feuille imprimée (44), comprenant une représentation ou une décoration, un cadre de support de finition (45) comprenant une paroi de verrouillage de finition (211', 221'),
un ou plusieurs éléments de fixation (51), tels que des clous ou des vis, étant fixés sur ledit cadre de support (43), qui sont appropriés pour fixer le panneau externe (41) à la paroi de verrouillage de finition (211', 221') de manière amovible, ladite feuille imprimée (44) étant ancrée au cadre de support (43) au moyen du ou des éléments de fixation (51), dans laquelle
le cadre de support de finition (45) est une barre métallique unique ayant une extension préférentielle dans une première direction d'extension (X) et qui ne comporte pas d'autres composants de support.

2. Porte (7) selon la revendication 1, dans laquelle la feuille imprimée (44) comprend des ouvertures d'ancrage (441) appropriées pour être traversées par les éléments de fixation (51).

3. Porte (7) selon la revendication 1 ou 2, dans laquelle un élément d'éclairage, tel qu'une bande de LED, est logé sur le cadre de support (43), dans l'espace entre la feuille imprimée (44) et le panneau externe (41), ou sur le cadre de support de finition (45).

4. Porte (7) qui peut être ancrée de manière rotative à un meuble (1000), par exemple pour une cuisine modulaire, ladite porte (7) comprenant :
un panneau externe (41) comprenant une représentation ou une décoration, un cadre de support de finition (45) comprenant une paroi de verrouillage de finition (211', 221'),
un ou plusieurs éléments de fixation (51), tels que des clous ou des vis, étant fixés sur ledit panneau externe (41), qui fixent de manière amovible le panneau externe (41) à la paroi de verrouillage de finition (211', 221')
ledit panneau externe (41) ayant une épaisseur inférieure ou égale à vingt-cinq millimètres, de préférence inférieure ou égale à huit millimètres,
**caractérisé en ce que** le cadre de support de finition (45) est une barre métallique unique ayant une extension préférentielle dans une première direction d'extension (X) et qui ne comporte pas d'autres composants de support.

5. Porte (7) selon l'une quelconque des revendications précédentes, dans laquelle le panneau externe (41) est en pierre, ou en métal, ou en grès, ou en MDF, ou en PVC, ou en PET, ou en verre.

6. Porte (7) selon l'une quelconque des revendications précédentes,
comprenant une ou plusieurs ouvertures de fixation de finition (211a, 221a) obtenues dans la paroi de verrouillage de finition (211', 221') dans laquelle, au moins un élément élastique (6) est positionné derrière la paroi de verrouillage de finition (211', 221'), à proximité des ouvertures de fixation de finition (211a, 221a), approprié pour subir une déformation élastique et fixer par encliquetage un ou plusieurs éléments de fixation (51), tels qu'un clou ou une vis (5), de sorte que la vis ou le clou (5) est empêché de se déplacer le long d'une direction perpendiculaire K à la direction d'insertion de la vis/du clou dans les ouvertures de fixation de finition.

7. Meuble (1000), comprenant au moins deux unités modulaires (1), chaque unité modulaire (1, 1A) desdites unités modulaires (1, 1A) comprenant :
un panneau inférieur (10), un panneau droit (20) et un panneau gauche (30), constitués d'une feuille métallique mince et couplés l'un à l'autre définissant une cavité interne (I) en forme de boîte ouverte, chacun desdits panneaux droit (20) et gauche (30) comprenant une face de panneau interne (20', 30'), faisant face à la cavité interne (I), et une face de panneau externe (20", 30 "), ne faisant pas face à la cavité interne (I) et s'étendant principalement selon une première direction d'extension (X) et une deuxième direction d'extension (Y) perpendiculaire à la première direction d'extension (X) et s'étendant beaucoup moins dans une troisième direction d'extension (Z) perpendiculaire à la première (X) et à la deuxième (Y) directions d'extension, c'est-à-dire ayant une faible épaisseur dans la troisième direction d'extension (Z),
dans lequel chacun desdits panneaux droit (20) et gauche (30) comprend au moins un bord de panneau supérieur (21, 31) et un bord de panneau inférieur (22, 32) qui délimitent l'extension du panneau le long de la première direction d'extension (X),
dans lequel, à proximité desdits bords supérieurs (21, 31) et des bords inférieurs (22, 32), chaque panneau comprend un pli (210, 220) de la feuille métallique comprenant une paroi de verrouillage (210', 220' ; 310') s'étendant le long de la première direction d'extension (X) beaucoup moins que l'extension de l'ensemble du panneau le long de la même première direction d'extension (X) et étant espacé de la face externe du panneau (20"), des ouvertures de fixation (211, 221) étant obtenues sur ladite paroi de verrouillage (210', 220'; 310') pour fixer de manière amovible une unité modulaire égale (1),
dans lequel les au moins deux unités modulaires (1, 1A) sont reliées l'une à l'autre au moyen d'éléments de fixation de module (52) insérés dans une ou plusieurs des ouvertures de fixation (211, 221) et/ou des ouvertures de fixation auxiliaires (231) de chacune desdites au moins deux unités modulaires (1), et dans lequel ledit meuble comprend au moins une porte (7) selon l'une quelconque des revendications 1 à 6, ancrée de manière rotative à au moins l'une des unités modulaires (1, 1A).

8. Meuble (1000) selon la revendication 7, dans lequel le panneau inférieur (10), le panneau droit (20) et le panneau gauche (30) sont fabriqués en une seule pièce et obtenus en pliant une seule feuille (1') le long des affaiblissements (12', 13') de la feuille (1').

9. Meuble (1000) selon la revendication 7 ou 8,
dans lequel chacun desdits panneaux droit (20) et gauche (30) comprend au moins un bord de panneau gauche (23, 33) et un bord de panneau droit (24, 34) qui délimitent l'extension du panneau le long de la deuxième direction d'extension (Y),
dans lequel, à proximité d'au moins ledit bord gauche (23, 33), chaque panneau comprend un pli auxiliaire (230, 330) de la feuille métallique comprenant une paroi de verrouillage auxiliaire (230', 330') s'étendant le long de la deuxième direction d'extension (Y) beaucoup moins que l'extension du panneau entier le long de la même deuxième direction d'extension (Y) et étant espacé de la face de panneau externe (20"),
des ouvertures de fixation auxiliaires (231) étant obtenues sur ladite paroi de verrouillage auxiliaire (230', 330') pour fixer de manière amovible un élément de finition (4) ou une unité modulaire égale (1).

10. Meuble (1000) selon l'une quelconque des revendications 7 à 9, dans lequel les ouvertures de fixation (211, 221) et les ouvertures de fixation auxiliaires (231) sont des œillets comprenant une région de section réduite (222) par rapport à une région de section normale (223) pour permettre à une tête d'une vis ou d'un clou (5) de passer de la région de section normale (223) et empêcher la vis ou le clou (5) de sortir de la région de section réduite (222).

11. Meuble (1000) selon la revendication 10, dans lequel au moins un élément en plastique (6) est positionné derrière la paroi de verrouillage (210', 220' ; 310') et/ou derrière la paroi de verrouillage auxiliaire (230'), c'est-à-dire sur le côté de la paroi de verrouillage faisant face à la face de panneau externe (20"), à proximité d'une ou plusieurs des ouvertures de fixation (211, 221) ou des ouvertures de fixation auxiliaires (231), approprié pour subir une déformation élastique et fixer par encliquetage la vis ou le clou (5) de sorte que la translation de la vis ou du clou (5) est empêchée le long d'une direction perpendiculaire (K) à la direction d'insertion de la vis dans les ouvertures de fixation ou les ouvertures de fixation auxiliaires, ladite direction d'insertion étant sensiblement parallèle à la troisième direction d'extension (Z).

12. Meuble selon la revendication 11, dans lequel l'élément élastique (6) comprend un œillet d'élément élastique ayant une région de section réduite (222') par rapport à une région de section normale (223') pour permettre à une tête d'une vis ou d'un clou (5) de passer de la région de section normale (223') et empêcher la vis ou le clou (5) de sortir de la région de section réduite (222').

13. Meuble selon l'une quelconque des revendications 7 à 12, dans lequel le panneau droit (20) et/ou le panneau gauche (30) et/ou le panneau inférieur (10), à proximité du bord du panneau supérieur (21, 31) ou du bord du panneau inférieur (22, 32), comprend une paroi de verrouillage horizontale (115, 215, 315, 225) qui s'étend sur un plan parallèle à la troisième direction d'extension (Z) et éventuellement perpendiculaire uniquement à la première direction d'extension (X), des ouvertures de fixation (215', 315') étant obtenues sur ladite paroi de verrouillage horizontale (115, 215, 315, 225) pour fixer de manière amovible un élément de finition (4) ou une unité modulaire égale (1).

14. Meuble selon l'une quelconque des revendications 7 à 13 comprenant au moins un élément de finition (4) sur lequel sont ancrés des éléments de fixation (51) insérés dans une ou plusieurs ouvertures de fixation (211, 221) ou ouvertures de fixation auxiliaires (231).
